# EUROPEAN PATENT SPECIFICATION

(11) **EP 2 838 371 B1**
(45) Date of publication and mention of the grant of the patent: **24.02.2016**
(21) Application number: 13718026.1
(22) Date of filing: 17.04.2013
(51) Int. Cl.: A23C 19/02, A23C 19/024, A23C 19/028, A01J 25/00

(54) **A COAGULATION TUNNEL SYSTEM**
KOAGULATIONSTUNNELSYSTEM
SYSTÈME DE TUNNELS DE CAILLAGE

(30) Priority: 18.04.2012 DK 201270195
(43) Date of publication of application: 25.02.2015
(73) Proprietor: Henriksen, Niels Christian, 4320 Lejre (DK); JH Consulting V/Jørgen Henriksen, 4330 Hvalsø (DK)
(72) Inventor: HENRIKSEN, Jørgen, 4330 Hvalsø (DK)
(74) Representative: Plougmann & Vingtoft A/S
(86) International application number: PCT/DK2013/050108
(87) International publication number: WO 2013/156032

(56) References cited:
- WO-A1-85/03844
- US-A- 3 394 011
- US-A- 4 044 662

## Description

### FIELD OF THE INVENTION

The invention relates to coagulation tunnels and coagulation systems used when producing cheeses cast in retail containers. The actual tunnels are provided with conveyor belts on which the open top containers with the product are moved during the coagulation process which is initiated by rennet being mixed into the product in the filling process.

### BACKGROUND OF THE INVENTION

There is a steadily growing market for cheeses cast in the containers in which they are finally distributed. The cheeses can be manufactured either from retentate from ultrafiltration or microfiltration plants or from recombined mix.

Simultaneous with the filling into containers, the retentate or recombined mix is mixed with a rennet solution which will start a coagulation process in the product.

In plants according to the known art the open top and filled containers are moved through a coagulation tunnel for about 20-30 minutes. The tunnels are equipped with sterile air units sending laminar flows of sterile air down over the containers in order to prevent yeast and mould from reaching the product. US-A-4 044 662 discloses a machine for production of cheese.

Coagulation tunnels according to the known art are open under the forward flow part of the conveyor belt. Internally these tunnels have to be cleaned manually which is a difficult and time-consuming job. US-A-3 394 011 discloses an apparatus for the continuous production of cheese curd. WO-A-85/03844 discloses a continuous cheese coagulator.

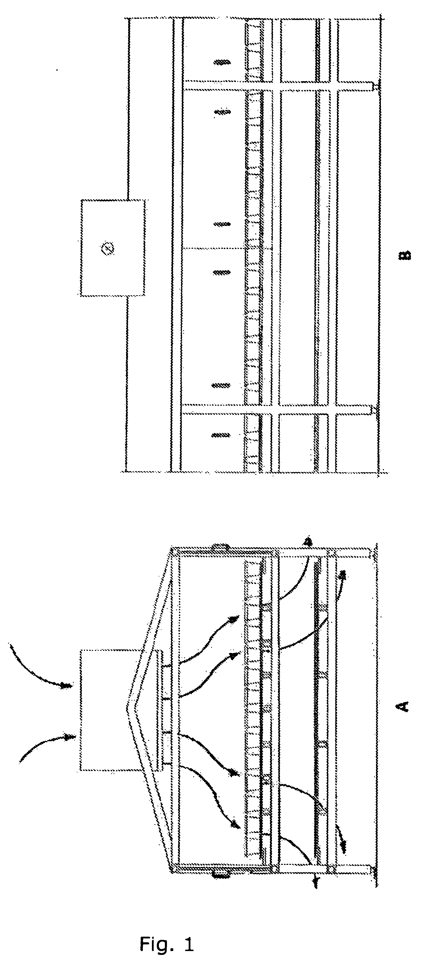

In Fig. 1 is shown a transversal cross section and a longitudinal cross section of a known coagulation tunnel. The tunnel has transparent side walls, a stainless steel roof with a sterile air filter unit mounted in the roof of the tunnel. Arrows show the air flow through the sterile air unit and tunnel and out into the room under the conveyor belt. Cleaning is particularly difficult in areas where structural parts of the tunnel meet or are assembled.

Several tunnels according to the known art have been erected in air conditioned rooms where the temperatures are kept at 15-20 degrees Celsius. The sterile air units mounted in the roofs of coagulation tunnels according to the known art draw air from the rooms and send it sterilized down over the cheeses on the conveyor belts. The cold air stream disturbs the coagulation process in the product which calls for a temperature around 30 degrees Celsius. For that reason heating units are known to have been incorporated in the sterile air units. Due to the design of coagulation tunnels according to the known art this results in warm air being discharged from the tunnels into the air-conditioned rooms adding to the refrigeration capacity required to maintain the temperature in the rooms.

For installation in places where the ambient temperature exceeds the cheese making temperature, plants are known to have been supplied with cooling of the sterile air.

In plants built according to the known art the inlet conveyors in the tunnels are of the stainless steel lamella-type. As the inlet conveyor moves the containers under the filling unit, continuous cleaning by water spray is necessary in order to clean possible dripping of product on the conveyor from the filling process.

The container dispenser is in the known art a unit mounted on the side of the inlet conveyor, allowing the suction device used in the dispensing process to move up under the stack of containers separating them one by one from the stack. The dispensed containers are subsequently pushed on to the inlet conveyor.

In the known art the outlet conveyor is in the same level as the coagulation conveyor, this necessitates a device for either pulling or pushing the containers with the coagulated cheese curd from the coagulation conveyor to the outlet conveyor. Pulling the containers requires a device which is lowered into the upper empty part of the containers. This method is not accepted by many users as particles or residues of product adhering to the inner part of the container can be transferred from container to container. To solve this problem plants have been built pushing the containers on to the outlet conveyor, this system, however, requires more spacing between the row of containers in the tunnel allowing the push-out device to be lowered behind a row of containers without colliding with the following row of containers. This method results in longer tunnels for a given capacity.

In plants built according to the known art, transfer of the containers from the inlet conveyor to the coagulation tunnel conveyor belt and further to the outlet conveyor takes place by electrically driven units placed above the coagulation conveyor belt.

### OBJECT OF THE INVENTION

It is the object of this invention to provide a coagulation tunnel system for plants producing cast cheeses which overcomes the one or more of the problems of the prior art.

It is a further object of the invention to provide an alternative to the prior art.

### SUMMARY OF THE INVENTION

The object of the invention is accomplished in a first aspect by a coagulation tunnel having a closed housing, an inlet for containers containing substance to coagulate into the coagulation tunnel and an outlet for the containers from the tunnel after the substance has coagulated, and enclosing a conveyer belt for conveying containers from the inlet to the outlet while the substance contained in the containers coagulates, air distribution means for distributing air, preferably being sterile air, in the tunnel, cleaning liquid-spraying means arranged above the conveyer belt and being adapted to spray a cleaning liquid onto the interior surface of the closed housing, the conveyer belt and, preferably, the parts of the inlet and outlet being within the housing. The closed housing forms a trough under the conveyer belt for collecting the sprayed cleaning liquid.

The inlet and outlet of the tunnel is typically and preferably considered to be openings provided in the closed housing of the tunnel. Furthermore, a coagulation tunnel according to the present invention is typically and preferably considered to comprise the elements and parts enclosed by and including the closed housing. However, as the containers with content are conveyed through the tunnel, such containers with content are preferably not considered to be comprised by a coagulation tunnel according to the present invention. Filling of the containers is preferably carried out outside the coagulation tunnel whereafter they are transferred into the coagulation tunnel through the inlet of the coagulation tunnel.

The coagulation tunnel may preferably be embodied in a coagulation tunnel system, which includes an inlet conveyor for bringing the containers containing substance to coagulate into the coagulation tunnel, and an outlet conveyor for removing the containers from the tunnel after the substance has coagulated. The closed housing preferably encloses the conveyer belt for conveying containers from the inlet conveyor to the outlet conveyor and the parts of the inlet and outlet conveyors being within the housing.

Complete cleaning of these conveyors may advantageously be ensured by operating them during the cleaning process.

In some embodiments of the invention, one or more objects of the invention have been met by arranging the tunnels, preferably with associated inlet and outlet conveyors for CIP cleaning and for recirculation, preferably in the actual tunnel, of the sterile air which is heated or cooled in order to maintain the temperature required for the coagulation process. By introducing this, a big saving will be obtained in manpower and energy.

*Coagulation tunnel system* and *coagulation tunnel* are used interchangeably typically to indicate that a coagulation tunnel according to the invention comprises more than the void defined internally of the closed housing.

*CIP* is used as an abbreviation for Cleaning In Place.

In a second aspect, the invention relates to a conveyor comprising
- two conveyor belts being arranged parallel to each other with a distance in between to provide a space between the two conveyor belts,
   and the coagulation tunnel or the conveyor comprising
- a transfer device adapted to move a gripping means from a position below the two conveyor belts, through the space between the two conveyor belts and to a position above the two conveyor belts.

### BRIEF DESCRIPTION OF THE DRAWINGS

In the following detailed description of preferred embodiments of the invention will be presented with reference to the accompanying drawings in which:
Fig. 1 shows a transversal cross section and a longitudinal cross section of a known coagulation tunnel,
Fig. 2 shows a transversal cross section and a longitudinal cross section of a coagulation tunnel according to the invention, and
Fig. 3 and 4 each shows details of a coagulation tunnel according to the invention,
Fig. 5 shows an outlet conveyor mechanism according to the present invention.

### DETAILED DESCRIPTION OF THE INVENTION

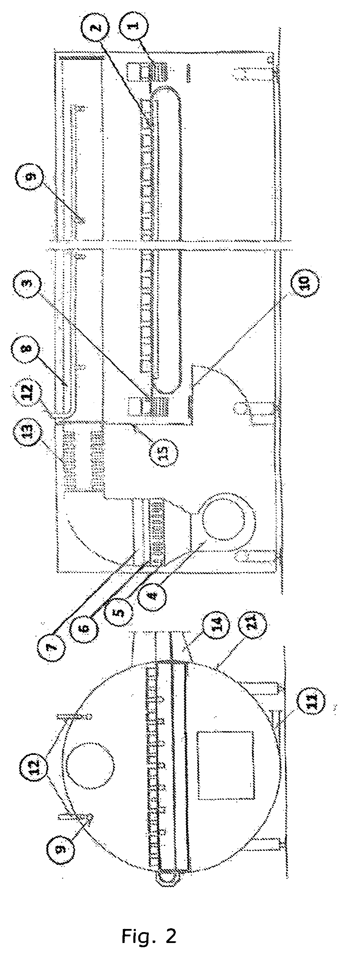

Reference is made to Fig. 2 which shows a preferred embodiment of the coagulation tunnel according to the invention where
- 1 -: is the inlet conveyor to the tunnel
- 2 -: is the coagulation tunnel conveyor belt
- 3 -: is the outlet conveyor from the tunnel
- 4 -: is the blower for recirculation of the air
- 5 -: is the heating/cooling unit for maintaining the temperature in the tunnel
- 6 -: is a coarse strainer
- 7 -: is the sterile air filter
- 8 -: is a bag for distributing the sterile air in the tunnel
- 9 -: are CIP turbines known in the art
- 10 -: is a door opened during production and closed during CIP
- 11 -: is a drain pipe for CIP liquid return
- 12 -: are pipes for CIP liquid forward flow to the turbines 9
- 13 -: shows the air distribution bag 8 in position for CIP cleaning of the tunnel
- 14 -: drip pans for return of CIP liquid to the tunnel trough, and
- 15 -: is a wall separating the coagulation area from the room containing the ventilation, heating/cooling and sterilization equipment.
- 21 -: is a closed housing.

The coagulation tunnel has a closed housing 21, preferably in the sense that liquid will be kept inside the closed housing during CIP cleaning unless allowed to flow out in a controlled manner through opening(s) provided in the closed housing 21 for such purpose (e.g. drain pipe 11). The closed housing 21 preferably comprises an inlet 1 for inletting containers containing substance to coagulate into the coagulation tunnel and an outlet 3 for outletting the containers from the tunnel after the substance has coagulated.

A coagulation tunnel according to the present invention may typically and preferably comprise an inlet conveyer for conveying containers from the inlet 1 and to the coagulation tunnel conveyor belt 2 and an outlet conveyor for conveying containers from the coagulation tunnel conveyer belt 2 and to the outlet 3.

As indicated in Fig. 2, the closed housing 21 is shaped as a cylinder with closed ends. However, other geometrical shapes may be used as the shape of the closed housing.

The closed housing 21 encloses a conveyer belt 2 for conveying containers from the inlet 1 to the outlet 3 while the substance contained in the containers coagulates, air distribution means 8 for distributing air, preferably being sterile air, in the tunnel, cleaning liquid spraying means 9 arranged above the conveyer belt 2 and being adapted to spray a cleaning liquid onto the interior surface of the closed housing 21 and the conveyer belt 2.

A part of the closed housing 21 forms a trough under the conveyer belt 2 for collecting the sprayed cleaning liquid.

A coagulation tunnel according to preferred embodiment of the invention is preferably considered to comprise the parts and elements (such as conveyor belt 2, air distribution means 8, cleaning liquid spray means 9) enclosed by the closed housing 21, except the containers being conveyed through the tunnel.

The air distribution means comprising one or more blowers 4 arranged inside the closed housing 21 for recirculating air internally in the tunnel. Furthermore, and as shown in Fig. 2, the air distribution means comprises a unit 5 for heating and/or cooling the air being distributed by the air distribution means, and a coarse strainer 6 for straining the air being distributed by the air distribution means. The unit 5 is arranged downstream of the blower 4 and the strainer is arranged downstream of the unit 5 as seen from the flow direction of the air through the air distribution means. However, the relative positions of the strainer 6 and the unit 5 may be interchanged.

Before the air leaves the air distribution means internally in the coagulation tunnel, the air should be filtered to avoid contamination. Accordingly, the air distribution means comprise a filter 7, preferably being a sterilizing filter In order to distribute air over the conveyer 2, preferably in an even manner, the air distribution means comprising an elongated member, preferably in the form of a bag 8, extending longitudinal above the conveyer belt 2, and the elongated member is formed from an air penetrable material so that air fed into the elongated member at one end thereof flows through the surface of the member and towards the upper surface of the conveyer belt 2. The air penetrable material may be fabric. Alternatively, the elongated member is a hollow tube provided with penetrations allowing air to flow out from the elongated member.

Alternatively or in combination with the above, sterilization can be by UV radiation carried out by a UV tube mounted in a stainless steel pipe. A fan is arranged to draw air from under the coagulation tunnel conveyor belt 2 and discharge it across the UV tube and into to a stainless steel pipe leading to an air outlet above the coagulation tunnel conveyor belt 2. The advantage of this set-up is that less energy consumption is required, and the air distribution system can remain in place during the cleaning process in the coagulation tunnel.

With reference to the embodiment shown in Fig. 2, UV sterilisation may be embodied by arranging the UV tube in a stainless pipe leading air to the inlet of the blower 4. In such embodiments, a connection is present allowing air to be drawn from below the coagulation tunnel conveyor 2 and through the wall 15.

The through is preferable and as indicated in Fig. 2 an integral part of the closed housing 21 and is typically constituted by lower section of the closed housing. The lower section has concave shape acting as a receptacle. Furthermore, the trough may preferably comprise a drain pipe 11 for draining cleaning liquid from the trough.

An advantage feature of coagulation tunnel according to the invention is that the coagulation tunnel is divided into two separate sections by a wall element 15 comprising a closable door 10. Thereby one section comprising elements of the air distribution means moving the air through the air distribution means is provided, and another section comprising the conveyer belt 2, the elements of the air distribution means 8 distributing air, preferably being sterile air, in the tunnel, and cleaning liquid spraying means 9.

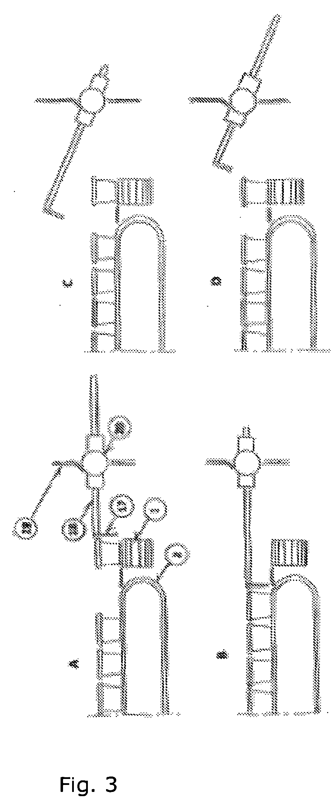

The coagulation tunnel shown in Fig. 2 further comprises a transfer unit for transferring containers from the inlet 1 to the conveyer belt 2 and from the conveyer belt 2 to the outlet 3. An example of such a transfer unit is shown in Fig. 3.

When operating the inlet and outlet conveyors during CIP of the tunnel, small quantities of CIP liquid can be carried out from the actual tunnel area. The drip pans 14 will return such liquid to the tunnel trough.

Fig. 3 shows a preferred embodiment of the transfer unit drive arranged outside the tunnel area. In Fig. 3:
2 - is the tunnel conveyor belt
1 - is the inlet conveyor
17 - is a plate for pushing a row of containers from the inlet conveyor 1 to the coagulation tunnel conveyor belt 2
18 - is a movable rod driven by a drive unit mounted outside the coagulation tunnel
19 - is the wall of the coagulation tunnel
20 - is a turning device for lifting the plate 17 on the backward movement as shown in C and D followed by lowering the plate to the position shown in A and B.

In the prior art equipment transfer of containers from inlet conveyor 1 to the coagulation tunnel conveyor belt 2 and from the coagulation conveyer belt 2 to the outlet conveyor 3 takes place by equipment placed inside the tunnel above the coagulation conveyor belt 2. This location is unsuitable in a tunnel which is cleaned by CIP as the electrical drive and installation is not easily protected against the acid and lye solutions used at the CIP cleaning.

The transfer unit shown in Fig. 3 is arranged in the wall of the closed housing and comprises; a moveable rod 18 being controlled so as to perform a reciprocating movement to push containers in a horizontal direction and a rotating movement to make way for containers entering or leaving the tunnel, and wherein the actuation means, such as electrical or pneumatic motor(s), of the transfer units is/are arranged outside the closed housing 21, as shown in Fig. 3. Preferably, the transfer units are arranged in the wall in such a manner that upward pointing surfaces of the arrangement are inclined to allow cleaning liquid to flow off the surfaces and into the trough.

In the present invention, activation of the transfer units takes place by electrical or pneumatic means arranged outside the actual tunnel. A possible embodiment is shown in Fig. 3 where 19 is the tunnel wall. 17 is a plate which can push a row of containers from the conveyor 1 to the coagulation conveyor belt 2. The plate 17 is activated by rod(s) 18 which slide(s) in bearing housing(s) 20 which has/have the centre(s) in the tunnel wall. The bearing housing 20 in the shown embodiment can be swivelled to lift the plate 17 during the return stroke in order not to delay in feed of containers on the conveyor 1. The rod(s) 18 is/are activated by electrical or pneumatic means arranged outside the actual tunnel.

During operation, a container which is located on the inlet conveyor belt 1 is pushed onto the coagulation tunnel conveyor 2 by the rod 18 performing a translatoric movement along the longitudinal direction of the rod whereby the plate 17 pushes against the surface of the container (see Fig. 3A and B). After the container has been pushed onto the coagulation tunnel conveyor belt 2, the rod 18 is rotated and retracted as shown in Fig. 3C and D. The rotational movement of the rod minimises the risk of the extraction result in that the plate 17 touches a container which during the extraction is advanced by the inlet conveyor belt 1. Typically, the plate 17 extends the width of the coagulation conveyer belt 2 and a rod 18 is arranged at both ends of the plate 17.

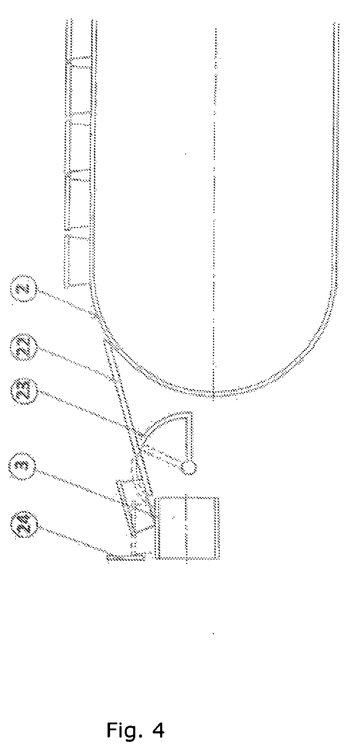

Reference is made to Fig. 4 showing a particular embodiment of a transfer unit for transferring containers from the conveyor belt 2 and to the outlet 3, wherein the outlet 3 is installed at a lower horizontal level than the upper side of the coagulation tunnel conveyor belt (2). As seen in Fig. 4, the transfer unit for transferring containers from the conveyer belt 2 to the outlet comprising a slide 22 extending slanted from an upper side of the coagulation tunnel conveyor belt 2 and to the outlet 3, and a pushing device 23.

Fig.4 shows a preferred embodiment of an outlet transfer unit comprising a slanted slide 22 and a pushing device 23. The outlet conveyor 3 is installed at a lower horizontal level than the upper side of the coagulation tunnel conveyor belt 2. A slide 22 extending from the coagulation tunnel conveyor belt 2 and to the outlet conveyor 3 transfers the containers by gravity action with coagulated cheese curd to the outlet conveyor 3. In order to make sure that the containers will be placed as desired on the outlet conveyor, a pushing device 23 will move the containers, if necessary, to the desired position on the outlet conveyor 3. The pushing device is rotatable and upon rotation moves through a slit provided in the slide 22 and acts on the side of the container to push it fully onto the belt of the outlet conveyor 3. In Fig. 4, the pushing device 23 is shown at its two most outer positions; full lines show the retracted position and dotted lines show the advanced position. An end stop 24 may make sure that the containers will not slide too far and out of the outlet conveyor 3. The system described eliminates the problems from the known art, no contamination with particles transferred from container to container and no need for additional length of the tunnel as the rows of containers can be close together.

Preferred embodiments of the coagulation conveyer tunnel comprising an inlet conveyor 1. The inlet conveyor 1 comprising two stainless steel chains with a spacing between the parallel chains allowing passage of a suction device which moves up under the stack of containers in a container dispenser unit dispensing the containers one by one directly onto the inlet conveyor 1. This dispensing and conveying permits the container dispenser to be mounted directly above the inlet conveyor 1, eliminating the need for the side mounted station with push over device required in plants according to the known art. The dispensing and conveying, furthermore, makes the continuous flushing of the conveyor unnecessary as possible dripping from the filling unit will fall between the chains. This dispensing and conveying may thus save energy by eliminating the need for horizontal pushing of the containers to the inlet conveyor and a considerable quantity of water by avoiding the conveyor washer.

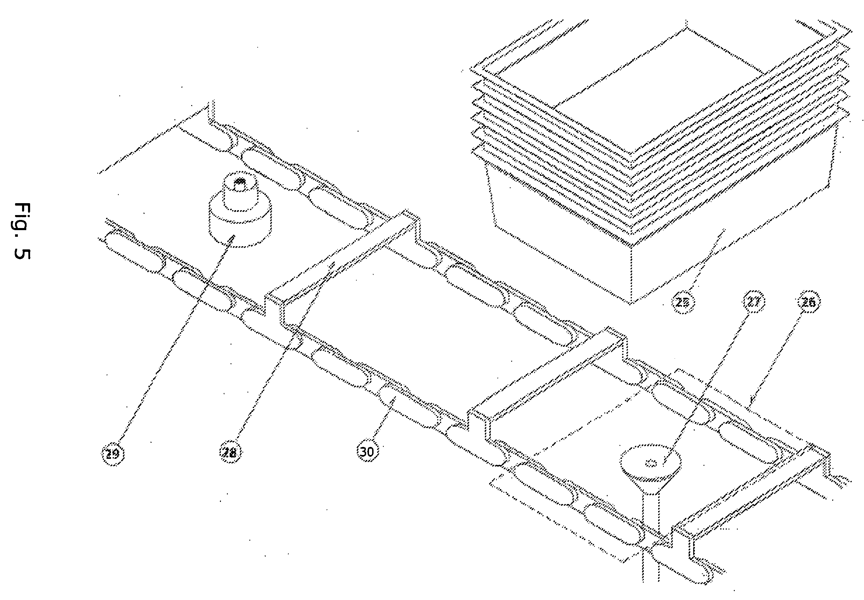

In a preferred embodiment, see Fig. 5, the inlet conveyer comprising two conveyor belts 30 being arranged parallel to each other with a distance in between to provide a space between the two conveyor belts. Preferably, each of the two conveyor belts 30 of the inlet conveyor comprising a stainless steel chain. Transfer of a container 25, contained in a stack above the inlet conveyer, to a position in between the push bars 28, is carried out by a transfer device adapted to move a gripping means 27 from a position below the two conveyor belts 30, through the space between the two conveyor belts 30 and to a position above two conveyor belt 30 below the stack of containers 25. The gripping means 27 comprising a suction cup configured to grip a container from the stack of containers and the gripping means is configured to perform a reciprocating movement up and down. In fig. 5, the dotted lines 26 indicated below the stack of containers 25 along the conveyor belts 30 show the position of a container once arranged on the inlet conveyor. Once arranged on the two conveyer belts 30, the conveyer belts move to the left with reference to Fig. 5 and a downstream push bar 28 abuts to the side of a container 25 thereby moving the container 25 towards a filling device 29.

The filling device 29 is configured, typically by being arranged at the end of a longitudinal moveable tube, to be moved up and down in a reciprocating movement. The filling device 29 is operated in a manner so that it moves upwardly during dispensing of the liquid into a container in order to avoid air entrance into the liquid filled into the container 25. It is preferred, that the exit of the filling device is located at the surface of the liquid in the container 25.

## Claims

1. A coagulation tunnel having a closed housing (21) comprising;
- an inlet (1) for inletting containers containing substance to coagulate into the coagulation tunnel and an outlet (3) for outletting the containers from the tunnel after the substance has coagulated,
and enclosing
- a conveyer belt (2) for conveying containers from the inlet (1) to the outlet (3) while the substance contained in the containers coagulates,
- air distribution means (8) for distributing air, preferably being sterile air, in the tunnel,
- cleaning liquid spraying means (9) arranged above the conveyer belt (2) and being adapted to spray a cleaning liquid onto the interior surface of the closed housing (21) and the conveyer belt (2),
wherein a part of the closed housing (21) forms a trough under the conveyer belt (2) for collecting the sprayed cleaning liquid.

2. A coagulation tunnel according to claim 1, wherein the air distribution means comprising one or more blowers (4) arranged inside the closed housing (21) for recirculating air internally in the tunnel.

3. A coagulation tunnel according to claim 1 or 2, wherein the air distribution means comprising a unit (5) for heating and/or cooling the air being distributed by the air distribution means.

4. A coagulation tunnel according to any of the preceding claims, wherein the air distribution means comprising a coarse strainer (6) for straining the air being distributed by the air distribution means.

5. A coagulation tunnel according to any of the preceding claims, wherein the air distribution means comprising a filter (7), preferably a sterilising filter.

6. A coagulation tunnel according to any of the preceding claims, wherein the air distribution means comprising an elongated member, preferably in the form of a bag (8), extending longitudinal above the conveyer belt (2), said elongated member being formed from an air penetrable material or the elongated member is a hollow tube provided with penetrations so that air fed into the elongated member at one end thereof flows through the surface or penetrations of the member and towards the upper surface of the conveyer belt (2).

7. A coagulation tunnel according to any of the preceding claims, wherein the trough comprising a drain pipe for draining cleaning liquid from the trough.

8. A coagulation tunnel according to any of the preceding claims, wherein the coagulation tunnel is divided into two separate sections by a wall element (15) comprising a closable door (10) and wherein
one section comprising
- elements of the air distribution means moving the air through the air distribution means, and
the other section comprising;
- the conveyer belt (2),
- the elements of the air distribution means (8) distributing air, preferably being sterile air, in the tunnel,
- cleaning liquid spraying means (9).

9. A coagulation tunnel according to any of the preceding claims, further comprising a transfer unit for transferring containers from the inlet to the conveyer belt and from the conveyer belt (2) to the outlet.

10. A coagulation tunnel according to claim 9, wherein the transfer units (17, 18, 20) are arranged in the wall of the closed housing (21), and comprising a moveable rod (18) being controlled so as to perform a reciprocating movement to push containers in a horizontal direction and a rotating movement to make way for containers entering or leaving the tunnel, and wherein the actuation means, such as electrical or pneumatic motor(s), of the transfer units is/are arranged outside the closed housing (21).

11. A coagulation tunnel according to claim 10, wherein the transfer units are arranged in the wall in such a manner that upward pointing surfaces of the arrangement are inclined to allow cleaning liquid to flow off the surfaces and into the trough.

12. A coagulation tunnel according to claim 9, wherein the transfer unit for transferring containers from the conveyer belt (2) to the outlet comprising;
- a slide (22) extending slanted from an upper side of the coagulation tunnel conveyor belt (2) and to the outlet, and
- a pushing device (23),
wherein the outlet is installed at a lower horizontal level than the upper side of the coagulation tunnel conveyor belt (2).

13. A coagulation tunnel according to any of the preceding claims, wherein the coagulation tunnel comprising an inlet conveyor for conveying containers from the inlet (1) and towards the coagulation tunnel conveyer belt (2), the inlet conveyer comprising;
- two conveyor belts being arranged parallel to each other with a distance in between to provide a space between the two conveyor belts,
and the conveyer tunnel comprising;
- a transfer device adapted to move a gripping means from a position below the two conveyor belts, through the space between the two conveyor belts and to a position above two conveyor belts.

14. A coagulation tunnel according to claim 13, wherein each of the two conveyor belts of the inlet conveyor comprising a stainless steel chain.

15. A coagulation tunnel according to any of the preceding claims further comprising UV sterilising means, such as one or more UV lamps, arranged to sterilise air to be distributed or being distributed in the coagulation tunnel.

## Patentansprüche

1. Koagulationstunnel mit einem geschlossenen Gehäuse (21), umfassend;
- einen Einlass (1) zum Einführen von Behältern mit einer zu koagulierenden Substanz in den Koagulationstunnel und einen Auslass (3) zum Ausführen der Behälter aus dem Tunnel nach der Koagulation der Substanz,
und einschließend
- ein Förderband (3) zum Fördern von Behältern von dem Einlass (1) zu dem Auslass (3), während die in den Behältern enthaltene Substanz koaguliert,
- Luftverteilungsmittel (8) zum Verteilen von Luft, vorzugsweise steriler Luft, in dem Tunnel,
- Reinigungsflüssigkeitssprühmittel (9), die über dem Förderband (2) angeordnet und zum Sprühen einer Reinigungsflüssigkeit auf die Innenfläche des geschlossenen Gehäuses (21) und das Förderband (2) beschaffen sind,
wobei ein Teil des geschlossenen Gehäuses (21) eine Rinne unter dem Förderband (2) zum Sammeln von gesprühter Reinigungsflüssigkeit ausbildet.

2. Koagulationstunnel nach Anspruch 1, wobei die Luftverteilungsmittel einen oder mehrere Gebläse (4) umfassen, der bzw. die im Inneren des geschlossenen Gehäuses (21) zum Umwälzen der Luft im Inneren des Tunnels angeordnet ist/sind.

3. Koagulationstunnel nach Anspruch 1 oder 2, wobei die Luftverteilungsmittel eine Einheit (5) zum Heizen und/oder Kühlen der durch die Luftverteilungsmittel verteilten Luft umfassen.

4. Koagulationstunnel nach einem der vorhergehenden Ansprüche, wobei die Luftverteilungsmittel ein Grobsieb (6) zum Reinigen der durch die Luftverteilungsmittel verteilten Luft umfassen.

5. Koagulationstunnel nach einem der vorhergehenden Ansprüche, wobei die Luftverteilungsmittel ein Filter (7), vorzugsweise ein Sterilisierungsfilter, umfassen.

6. Koagulationstunnel nach einem der vorhergehenden Ansprüche, wobei die Luftverteilungsmittel eine längliche Komponente, vorzugsweise in Form eines Beutels (8) umfassen, die sich in Längsrichtung über dem Förderband (2) erstreckt, wobei die längliche Komponente aus einem luftdurchlässigen Material ausgebildet ist oder die längliche Komponente ein hohler Schlauch mit ausgebildeten Durchdringungen ist, sodass in die längliche Komponente an einem Ende davon eingeführte Luft durch die Fläche oder Durchdringungen der Komponente und zu der oberen Fläche des Förderbands (2) strömt.

7. Koagulationstunnel nach einem der vorhergehenden Ansprüche, wobei die Rinne ein Ablaufrohr zum Ableiten von Reinigungsflüssigkeit aus der Rinne umfasst.

8. Koagulationstunnel nach einem der vorhergehenden Ansprüche, wobei der Koagulationstunnel durch ein Wandelement (15) umfassend eine schließbare Tür (10) in zwei getrennte Abschnitte unterteilt ist und wobei
ein Abschnitt
- Elemente der die Luft durch die Luftverteilungsmittel bewegenden Luftverteilungsmittel umfasst und
der andere Abschnitt
- das Förderband (2),
- die Elemente der Luftverteilungsmittel (8) zum Verteilen von Luft, vorzugsweise steriler Luft, in dem Tunnel, und
- Reinigungsflüssigkeitssprühmittel (9)
umfasst.

9. Koagulationstunnel nach einem der vorhergehenden Ansprüche, weiterhin umfassend eine Transfereinheit zum Transferieren von Behältern von dem Einlass auf das Förderband und von dem Förderband (2) zum Auslass.

10. Koagulationstunnel nach Anspruch 9, wobei die Transfereinheiten (17, 18, 20) in der Wand des geschlossenen Gehäuses (21) angeordnet sind und eine bewegliche Stange (18) umfassen, die derart gesteuert wird, dass sie eine Hin- und Herbewegung zum Schieben von Behältern in einer horizontalen Richtung und einer Drehbewegung zum Schaffen von Platz für Behälter, die in den Tunnel eingeführt werden oder diesen verlassen, durchführt, und wobei das/die Aktivierungsmittel, wie ein oder mehrere elektrische(r) oder pneumatische(r) Motor(en), der Transfereinheiten an der Außenseite des geschlossenen Gehäuses (21) angeordnet ist/sind.

11. Koagulationstunnel nach Anspruch 10, wobei die Transfereinheiten in der Wand derart angeordnet sind, dass nach oben weisende Flächen der Anordnung geneigt sind, sodass Reinigungsflüssigkeit von den Flächen und in die Rinne abfließen kann.

12. Koagulationstunnel nach Anspruch 9, wobei die Transfereinheit zum Transferieren von Behältern von dem Förderband (2) zum Auslass umfasst:
- eine Rutsche (22), die sich mit einer Neigung von einer oberen Seite des Förderbands (2) des Koagulationstunnels zum Auslass erstreckt, und
- eine Schiebevorrichtung (23),
wobei der Auslass in einer tiefer als die obere Seite des Förderbands (2) des Koagulationstunnels gelegenen horizontalen Ebene installiert ist.

13. Koagulationstunnel nach einem der vorhergehenden Ansprüche, wobei der Koagulationstunnel einen Einlassförderer zum Fördern von Behältern von dem Einlass (1) und zum Förderband (2) des Koagulationstunnels umfasst, wobei der Einlassförderer umfasst:
- zwei Förderbänder, die parallel zueinander mit einem Abstand dazwischen zur Schaffung eines Raums zwischen den beiden Förderbändern angeordnet sind,
und der Fördertunnel umfasst:
- eine Transfervorrichtung, die zum Bewegen eines Greifmittels von einer Position unterhalb der beiden Förderbänder durch den Raum zwischen den beiden Förderbändern und zu einer Position über den beiden Förderbändern beschaffen ist.

14. Koagulationstunnel nach Anspruch 13, wobei jeder der beiden Förderbänder des Einlassförderers eine Edelstahlkette umfasst.

15. Koagulationstunnel nach einem der vorhergehenden Ansprüche, weiterhin umfassend UV-Sterilisierungsmittel, wie eine oder mehrere UV-Lampen, die zum Sterilisieren von im Koagulationstunnel zu verteilender oder verteilter Luft angeordnet sind.

## Revendications

1. Tunnel de coagulation possédant une enceinte fermée (21) comprenant :
- une entrée (1) pour faire pénétrer dans le tunnel de coagulation des récipients contenant une substance à coaguler et une sortie (3) pour faire sortir les récipients du tunnel après coagulation de la substance,
et renfermant
- un tapis roulant (2) pour transporter des récipients de l'entrée (1) vers la sortie (3) pendant que la substance contenue dans les récipients coagule,
- un moyen de diffusion d'air (8) pour diffuser de l'air, étant de préférence de l'air stérile, dans le tunnel,
- un moyen de pulvérisation de liquide de nettoyage (9) disposé au-dessus du tapis roulant (2) et étant adapté pour pulvériser un liquide de nettoyage sur la surface intérieure de l'enceinte fermée (21) et le tapis roulant (2),
dans lequel une partie de l'enceinte fermée (21) forme une cuvette sous le tapis roulant (2) pour recueillir le liquide de nettoyage pulvérisé.

2. Tunnel de coagulation selon la revendication 1, dans lequel le moyen de diffusion d'air comprend un ou plusieurs ventilateurs (4) disposés à l'intérieur de l'enceinte fermée (21) pour recycler l'air à l'intérieur du tunnel.

3. Tunnel de coagulation selon la revendication 1 ou 2, dans lequel le moyen de diffusion d'air comprend une unité (5) pour chauffer et/ou refroidir l'air diffusé par le moyen de diffusion d'air.

4. Tunnel de coagulation selon l'une quelconque des revendications précédentes, dans lequel le moyen de diffusion d'air comprend un filtre épurateur grossier (6) pour épurer l'air diffusé par le moyen de diffusion d'air.

5. Tunnel de coagulation selon l'une quelconque des revendications précédentes, dans lequel le moyen de diffusion d'air comprend un filtre (7), de préférence un filtre stérilisateur.

6. Tunnel de coagulation selon l'une quelconque des revendications précédentes, dans lequel le moyen de diffusion d'air comprend un élément allongé, de préférence sous la forme d'un sac (8), s'étendant longitudinalement au-dessus du tapis roulant (2), ledit élément allongé étant constitué d'un matériau laissant passer l'air ou l'élément allongé étant un tube creux muni de pénétrations de manière à ce que l'air entrant par une extrémité de l'élément allongé s'écoule au travers de la surface des pénétrations de l'élément et vers la surface supérieure du tapis roulant (2).

7. Tunnel de coagulation selon l'une quelconque des revendications précédentes, dans lequel la cuvette comprend un tuyau d'évacuation pour évacuer le liquide de nettoyage de la cuvette.

8. Tunnel de coagulation selon l'une quelconque des revendications précédentes, dans lequel le tunnel de coagulation est divisé en deux tronçons distincts par un élément paroi (15) comprenant une porte (10) pouvant être fermée et dans lequel l'un des tronçons comprend :
- des éléments du moyen de diffusion d'air déplaçant l'air au travers du moyen de diffusion d'air, et
l'autre tronçon comprend :
- le tapis roulant (2),
- les éléments du moyen de diffusion d'air (8) qui diffusent l'air, étant de préférence de l'air stérile, dans le tunnel, et
- un moyen de pulvérisation de liquide de nettoyage (9).

9. Tunnel de coagulation selon l'une quelconque des revendications précédentes, comprenant également une unité de transfert pour transférer des récipients de l'entrée vers le tapis roulant et du tapis roulant (2) vers la sortie.

10. Tunnel de coagulation selon la revendication 9, dans lequel les unités de transfert (17, 18, 20) sont disposées dans la paroi de l'enceinte fermée (21), et comprenant une tige mobile (18) qui est commandée de manière à effectuer un mouvement de va-et-vient pour pousser des récipients dans une direction horizontale et un mouvement de rotation pour libérer de l'espace pour des récipients qui entrent dans le tunnel ou qui en sortent, et dans lequel les moyens de commande, tels qu'un ou plusieurs moteurs électriques ou pneumatiques, des unités de transfert sont disposés à l'extérieur de l'enceinte fermée (21).

11. Tunnel de coagulation selon la revendication 10, dans lequel les unités de transfert sont disposées dans la paroi de manière à ce que des surfaces orientées vers le haut de ces unités soient inclinées pour permettre à du liquide de nettoyage de s'écouler des surfaces vers la cuvette.

12. Tunnel de coagulation selon la revendication 9, dans lequel l'unité de transfert pour transférer des récipients du tapis roulant (2) vers la sortie comprend :
- une glissière (22) s'étendant en pente depuis une face supérieure du tapis roulant (2) du tunnel de coagulation et vers la sortie, et
- un dispositif de poussée (23),
dans lequel la sortie est installée à un niveau horizontal plus bas que la face supérieure du tapis roulant (2) du tunnel de coagulation.

13. Tunnel de coagulation selon l'une quelconque des revendications précédentes, dans lequel le tunnel de coagulation comprend un convoyeur d'entrée pour transporter des récipients de l'entrée (1) vers le tapis roulant (2) du tunnel de coagulation, le convoyeur d'entrée comprenant :
- deux tapis roulants disposés parallèlement l'un à l'autre et séparés par une distance formant un espace entre les deux tapis roulants,
et le tunnel de convoyeur comprend :
- un dispositif de transfert adapté pour déplacer un moyen de préhension d'une position située sous les deux tapis roulants, en passant par l'espace entre les deux tapis roulants, vers une position située au-dessus des deux tapis roulants.

14. Tunnel de coagulation selon la revendication 13, dans lequel chacun des deux tapis roulants du convoyeur d'entrée comprend une chaîne en acier inoxydable.

15. Tunnel de coagulation selon l'une quelconque des revendications précédentes comprenant également un moyen de stérilisation par UV, tel qu'une ou plusieurs lampes UV, disposé pour stériliser l'air qui doit être diffusé ou qui est diffusé dans le tunnel de coagulation.
